# EUROPEAN PATENT APPLICATION

(11) **EP 3 138 644 A2**
(43) Date of publication of application: **08.03.2017**
(21) Application number: 16184504.5
(22) Date of filing: 17.08.2016
(51) Int. Cl.: B22F 3/105, B22F 3/15, B22F 3/24, B22F 5/00, F01D 5/02

(54) **ROTATING COMPONENT, METHOD OF FORMING A ROTATING COMPONENT AND APPARATUS FOR FORMING A ROTATING COMPONENT**

(30) Priority: 03.09.2015 US 201514844456
(71) Applicant: General Electric Company, Schenectady, NY 12345 (US)
(72) Inventor: WILLETT, Fred Thomas, Schenectady, NY New York 12345 (US); ZHENG, Xiaoqing, Schenectady, NY New York 12345 (US)
(74) Representative: Foster, Christopher Michael

(57) **Abstract**

Provided are a method of forming a rotating component. The method for forming a rotating component includes providing a rotor (101) having an outer surface. A circumferential surface feature (131) is formed on the outer surface of the rotor (101). The forming includes applying metallic material to the outer surface of the rotor (101) to build up the circumferential surface feature (131) on outer surface of the rotor (101) to define at least one cooling passageway (211). A rotating component having a circumferential surface feature (131), a turbine system and an apparatus for forming the rotating component are also disclosed.

## Description

### FIELD OF THE INVENTION

This invention relates generally to cooling a rotating component, and more specifically, to a rotor in a turbine system.

### BACKGROUND OF THE INVENTION

Steam turbines extract work from a flow of steam to generate power. A typical steam turbine may include a rotor associated with a number of wheels. The wheels may be spaced apart from each other along the length of the rotor and define a series of turbine stages. The turbine stages are designed to extract useful work from the steam traveling on a flow path from an entrance to an exit of the turbine in an efficient manner. As the steam travels along the flow path, the steam causes the wheels to drive the rotor. The steam gradually may expand and the temperature and pressure of the steam gradually may decrease. The steam then may be exhausted from the exit of the turbine for reuse or otherwise. Higher temperature steam turbines may generate increased output as the increased temperature of the steam increases the overall energy available for extraction.

Generally described, a typical steam turbine may include a high pressure section, an intermediate pressure section, and a low pressure section. The sections may be arranged in series with each section including any number of stages. Within the sections, work is extracted from the steam to drive the rotor. Between the sections, the steam may be reheated for performing work in the next section. The high pressure and the intermediate pressure sections may operate at relatively high temperatures so as to increase the overall steam turbine output.

Advanced combined-cycle power plants rely on higher steam temperatures to operate at peak efficiency. However, exposure to higher steam temperatures reduces rotor life. Known design solutions focus on bucket and rotor materials and/or geometries, steam turbine operating temperatures and/or pressures, and/or piping solutions external to the steam flowpath. For example, one solution is to use better, more temperature-resistant, rotor materials. However, the use of such materials and known processes are expensive and often undesirably complex. In addition, limiting operating temperatures and pressures within the turbine limits the thermodynamic design space and may result in decreased turbine performance.

As higher inlet and reheat steam temperatures are proposed to increase combined cycle efficiency, more attention must be focused on turbine rotor cooling, such as by fluid cooling of the rotor itself. One barrier to rotor cooling in monoblock, or even welded, rotors, is the difficulty of creating long axial holes for passage of coolant. In order to provide rotor cooling using this method, axially-oriented cooling holes oriented circumferentially are required about the rotor. The orientation of the holes makes them very challenging to machine. Furthermore, the holes are very long and thin; the length-to-diameter ratio is much greater than the preferred ratio for conventional machining.

One known attempt to address higher steam temperatures involves changing the rotor geometry and materials to make a rotor that is acceptable for long-term operations, without providing external cooling. However, such geometries are generally more costly, reduce stage efficiency, and/or require costly, higher capability materials than designs that use an adequate cooling scheme. One known cooling scheme uses pipes routed through a steam flowpath to supply a cooling steam flow. For example, such pipes may be positioned within first-reheat, double-flow tub stages. Such pipes; however, create an obstruction within the main steam flow and add complexity to the system.

Another known attempt at a rotor cooling arrangement involves channeling a cooling fluid through an outer plenum defined in a stationary component of the steam turbine and channeling the cooling fluid from the outer plenum through a passageway defined in an airfoil of the stationary component. The cooling fluid is discharged from the airfoil passageway through an inner plenum of the stationary component to facilitate cooling an adjacent rotating component. The method includes providing the cooling fluid through the casing, which results in a more complicated arrangement that may be subject to leakage and/or loss of turbine efficiency.

### SUMMARY OF THE INVENTION

In one embodiment, a method for forming a rotating component that includes providing a rotor having an outer surface. A circumferential surface feature is formed on the outer surface of the rotor. The forming includes applying metallic material to the outer surface of the rotor to build up the circumferential surface feature on the outer surface of the rotor to define at least one cooling passageway.

In another embodiment, a rotating component that includes a rotor having a circumferential surface feature defining at least one passageway. The circumferential surface feature includes a feature formed on an outer surface of the rotor and built up from the outer surface to define the at least one passageway.

In another embodiment, an apparatus for forming a rotating component having an additive manufacturing cell. The additive manufacturing cell includes a metallic powder source arranged and disposed to provide metallic powder to the surface of a rotor and a focused energy source arranged and disposed to heat the metallic powder on the surface of the rotor to form a metallic layer on the surface of a rotor. The additive manufacturing cell is movable along an axis of the rotor and is arranged and disposed to sequentially deposit the metallic layers and form a circumferential surface feature having a cooling passage on the rotor.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 schematically shows an example of the steam turbine system, according to the present disclosure.
FIG. 2 shows an enlarged portion of the intermediate pressure section of a steam turbine system, according to an embodiment of the present disclosure.
FIG. 3 shows an enlarged portion of the intermediate pressure section of a steam turbine system, according to another embodiment of the present disclosure.
FIG. 4 is a process view of a method for fabricating an article, according to an embodiment of the disclosure.
FIG. 5 is a partial sectional view of a rotor having a circumferential surface feature, according to an embodiment of the present disclosure.
FIG. 6 is a partial sectional view of a circumferential surface feature having a cooling passage, according to an embodiment of the present disclosure.
FIG. 7 is a partial sectional view of a circumferential surface feature having a cooling passage, according to an embodiment of the present disclosure.
FIG. 8 shows an enlarged portion of the intermediate pressure section of a steam turbine system an injection point into a seal area, according to an embodiment of the present disclosure.
FIG. 9 shows an enlarged portion of the intermediate pressure section of a steam turbine system having an injection point into the steam flow path, according to an embodiment of the present disclosure.
FIG. 10 shows an additive manufacturing system, according to an embodiment of the present disclosure.
FIG. 11 schematically illustrates a method of forming a circumferential surface feature with an additive manufacturing system, according to an embodiment of the present disclosure.

Wherever possible, the same reference numbers will be used throughout the drawings to represent the same parts.

### DETAILED DESCRIPTION OF THE INVENTION

Provided are a rotating article having cooling passages and a method of forming a rotating article having cooling passages. Embodiments of the present disclosure, for example, in comparison to concepts failing to include one or more of the features disclosed herein, enable axial cooling passages, for example, in a monoblock turbine rotor. In addition, the steam turbine system, according to the present disclosure, enables cooling passages in a welded turbine rotor. The rotor cooling passages enable cooled rotors, which allow the use of present-day, low-cost turbine materials in turbines operating at temperatures higher than practical today. Further, the cooled rotors permit the ability to withstand higher steam temperatures and provide increased combined-cycle efficiency and better use of the high exhaust temperatures of modern gas turbines. Further still, the method according to the present disclosure permits formation of geometries for cooling passages that were not previously possible. Such flexibility in geometry permits targeted cooling and can reduce the overall amount of cooling flow used.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Systems used to generate power include, but are not limited to, steam turbines, gas turbines, and other turbine assemblies, such as steam turbines or land based aero-derivatives used for power generation. In certain applications, the power generation systems, including the turbomachinery therein (e.g., turbines, compressors, and pumps) and other machinery, may include articles that are exposed to heavy wear conditions. For example, the rotating articles may include certain power generation system components, such as steam turbine rotors or wheels or gas turbine rotors or wheels, and may operate in high heat and high revolution environments.

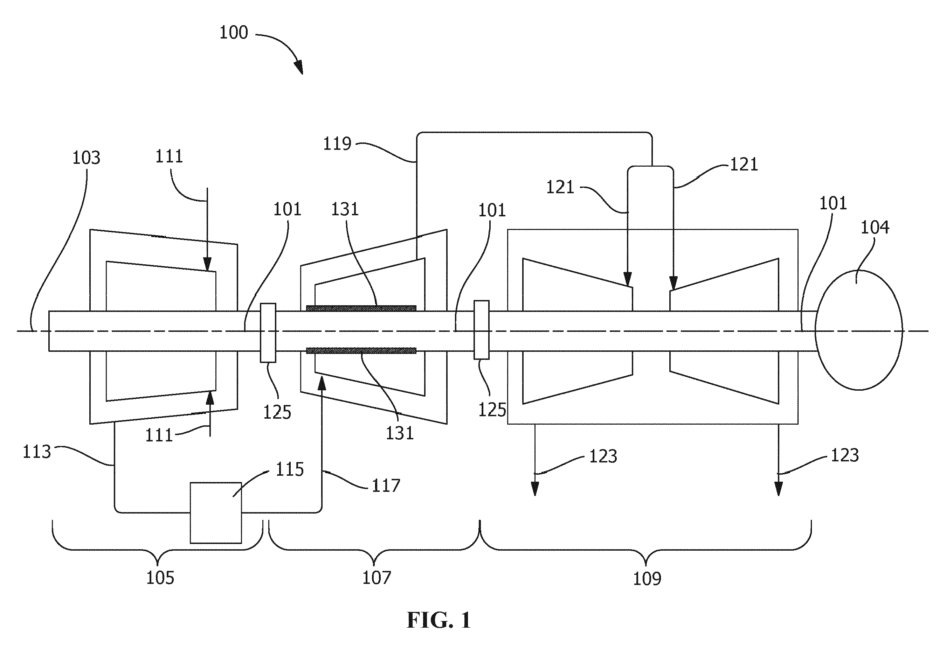

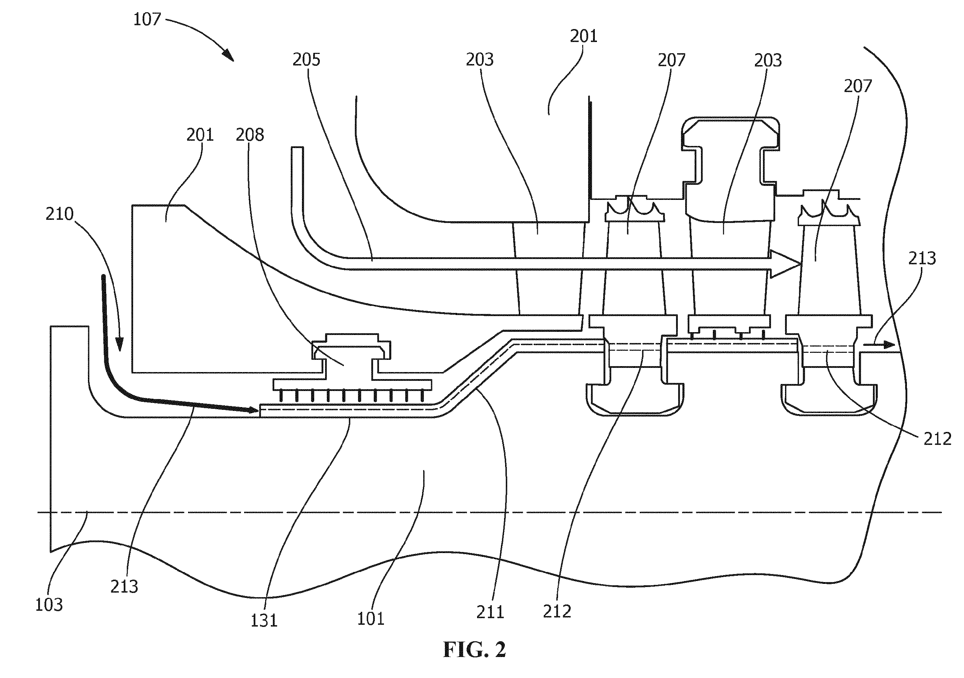

FIG. 1 schematically shows an example of the steam turbine system 100, according to the present disclosure. The steam turbine system 100 includes a turbine rotor 101 that is mounted rotatably about an axis of rotation 103. The steam turbine system 100 includes a high pressure (HP) section 105, an intermediate pressure (IP) section 107, and a low pressure (LP) section 109, each mounted on rotor 101. While FIG. 1 shows one arrangement of the HP section 105, IP section 107 and LP section 109, the present disclosure is not so limited, any suitable arrangement of HP section 105, IP section 107 and/or LP section 109 may be utilized. Each of the HP section 105, IP section 107 and LP section 109 include blades or buckets (not shown in FIG. 1) that are circumferentially mounted on rotor 101 in each of the HP section 105, IP section 107 and LP section 109. The blades or buckets are driven by steam fed to the respective section (see e.g., FIG. 2), wherein the rotation of the blades or buckets resulting from the steam generates mechanical work. The mechanical work produced in the turbine system 100 drives an external load 104, such as an electrical generator, via rotor 101. As shown in FIG. 1, high pressure steam is fed via high pressure steam inlets 111. In one embodiment, the HP section 105 receives steam at a pressure of from about 125 bar to about 200 bar and at a temperature of from about 565 °C to about 610 °C.

As shown in FIG. 1, the steam is exhausted from the HP section at high pressure steam outlet 113 and fed to a reheater 115, wherein heat is added to the steam. From the reheater 115, the steam is fed to IP section 107 via intermediate pressure steam inlet 117. In one embodiment, the IP section 107 receives steam at a pressure of from about 30 bar to about 60 bar and at a temperature of from about 565 °C to about 610 °C.

As shown in FIG. 1, the steam is exhausted from the IP section 107 at intermediate pressure steam outlet 119 and fed to the LP section 109 via low pressure steam inlet 121. In one embodiment, the IP section 107 receives steam at a pressure of from about 3 bar to about 9 bar and at a temperature of from about 240 °C to about 350 °C. The steam is then exhausted from the LP section 109 via low pressure outlets 123.

Each of the HP section 105, IP section 107 and LP section 109 are connected along rotor 101 via couplings 125. The couplings 125 may be mechanical couplings, such as bolted joints, or may be welded joints. In one embodiment, the couplings 125 permit detachment of any of the HP section 105, IP section 107 and/or LP section 109 for reconfiguration, service or maintenance.

The embodiment shown in FIG. 1, the IP section 107 includes a circumferential surface feature 131 formed rotor 101. The circumferential surface feature 131 includes at least one cooling passage 211 that, in one embodiment, is capable of conveying a cooling fluid. The circumferential surface feature is present across the circumference of the rotor surface and extends along at least a portion of the length of the rotor 101. The placement of the circumferential surface feature 131 is such that cooling fluid passing through the passageway, may be, for example, steam from downstream (e.g., steam at a lower temperature within the IP section 107 or from the LP section) or steam from the outlet of the HP section 105 prior to reheating.

FIG. 2 shows an enlarged portion of IP section 107. The IP section includes a casing 201 that surrounds rotor 101. Vanes 203 are mounted within casing 201 and receive steam in steam flow path 205 and direct the steam onto bucket 207. Bucket 207 is mounted in rotor 101 and rotates rotor 101 when driven by steam along steam flow path 205. A seal 208 is mounted within casing 201 and provides a sealing arrangement that prevents or substantially prevents leakage of steam from the steam flow path 205. In addition, the seal 208 separates the area of the IP section 107 having the steam flow path 205 from an exhaust passage 210. The exhaust passage 210 is arranged to permit exhausting of leaked steam through seal 208, if any. The rotor 101 further includes circumferential surface feature 131. Circumferential surface feature 131 includes a cooling passage 211 disposed within the circumferential surface feature 131, along a portion of the length of rotor 101. The circumferential surface feature 131 extends from a portion of rotor 101 prior to seal 208 and is arranged and disposed with cooling passage 211 in fluid communication with exhaust passage 210. The circumferential surface feature 131 extends in the opposite direction along the surface of rotor 101 for a distance that includes two buckets 207. While the circumferential surface feature 131 is shown as extending for a distance across two buckets 207, the length of circumferential surface feature 131 may vary depending on the amount of cooling of rotor 101 desired. To traverse buckets 207, the circumferential surface feature 131 is arranged and disposed with cooling passage 211 to align with bucket passage 212. Bucket passage 212 is an opening or passage that is machined or otherwise formed in bucket 207 to permit flow of cooling fluid 213. In one embodiment, cooling fluid 213 is fed into exhaust passage 210. The cooling fluid 213 may include steam drawn from high pressure steam outlet 113 (see FIG. 1). The cooling fluid 213 is fed to the circumferential surface feature 131 and is directed into cooling passage 211, wherein the cooling fluid 213 cools rotor 101 and is exhausted into the steam flow path 205. The steam from the steam outlet 113 of HP section 105 has a lower temperature and higher pressure than the steam within the steam flow path 205 and permits cooling of rotor 101 and exhausting of the steam after cooling into the steam flow path 205. Further, although the arrangement shown in FIG. 2 is for the IP section 107, other sections of the turbine system 100, such as the HP section 105, may also include the circumferential surface feature 131 on rotor 101.

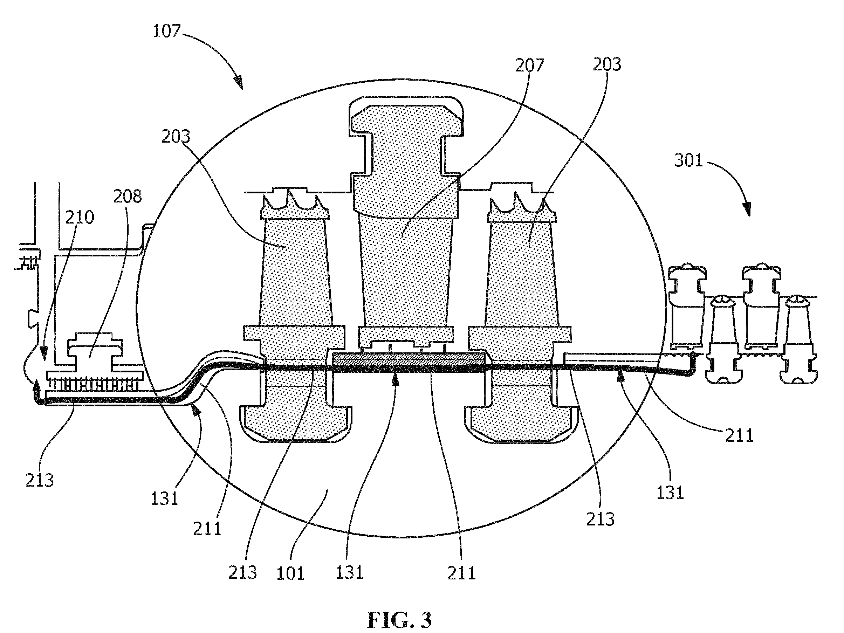

FIG. 3 shows an enlarged portion of IP section 107 having an arrangement shown in FIG. 2. Circumferential surface feature 131 includes a cooling passage 211 disposed within the circumferential surface feature 131, along a portion of the length of rotor 101. In the embodiment shown in FIG. 3, cooling fluid 213 as steam drawn from downstream steam rotor stage 301, is fed to the circumferential surface feature 131 and is directed into cooling passage 211, wherein the cooling fluid 213 cools rotor 101 and is exhausted into exhaust passage 210 beyond seal 208. The steam from the downstream rotor stage 301 of IP section 107 has a lower temperature and lower pressure than the steam within the steam flow path 205 and permits cooling of rotor 101 and exhausting of the steam after cooling into the lower pressure exhaust passage 210.

As described above, the steam as cooling fluid 213 may be drawn from other sections of the steam turbine system (e.g., from the HP section 105 or LP section 109), see, for example, FIG. 2. Alternatively, the cooling fluid 213 may be drawn internally from the same section (e.g., within the IP section 107), see, for example, FIG. 3. In the embodiments wherein the cooling fluid is drawn from the other sections or from another source external to the steam turbine system 100, a conduit, or other fluid conveying device, is arranged to provide the cooling fluid 213 (steam in certain embodiments) to the exhaust passage 210, for example, by passing through an opening in the casing 201. In another embodiment, the circumferential surface feature 131 may be extended to outside casing 201 and fluidly connect to a cooling fluid inlet outside the casing 201. In one embodiment, the circumferential surface feature 131 extends along the rotor through the coupling 125 and into the HP section 105, wherein the steam as cooling fluid 213 may be drawn into the IP section 107 to cool rotor 101.

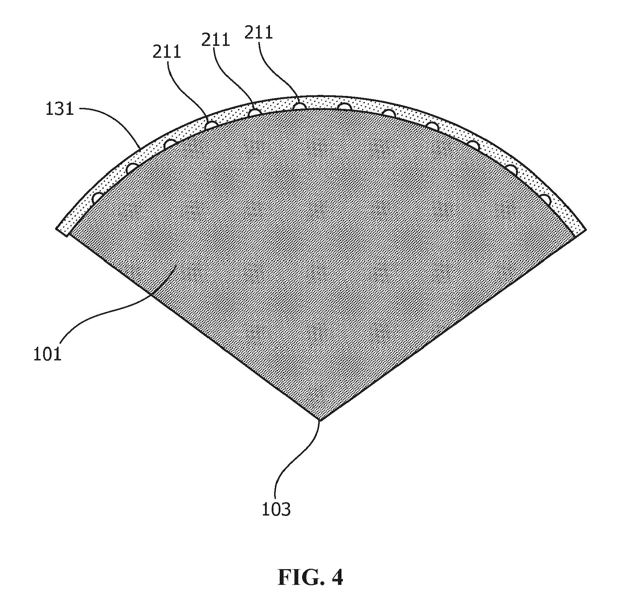

FIG. 4 shows a partial sectional view of rotor 101 with circumferential surface feature 131 disposed thereon. The circumferential surface feature 131 includes cooling passage 211. Although FIG. 4 shows cooling passages 211 as being semicircular in cross-sectional geometry, the present disclosure is not so limited. Suitable cross-sectional geometries include circular, substantially circular, ovoid, elliptical, triangular, teardrop, square, rectangular, polygonal, or a combination thereof or any other cross-sectional geometries that provide the desired cooling of rotor 101. In addition, although the cooling passages 211 are shown evenly spaced along the periphery of the rotor 101, the present disclosure is not so limited. Other arrangements of cooling passages may be utilized wherein the cooling passages are staggered at regular or irregular intervals and/or arranged at parallel, perpendicular, or at other angles to the axis of rotation 103.

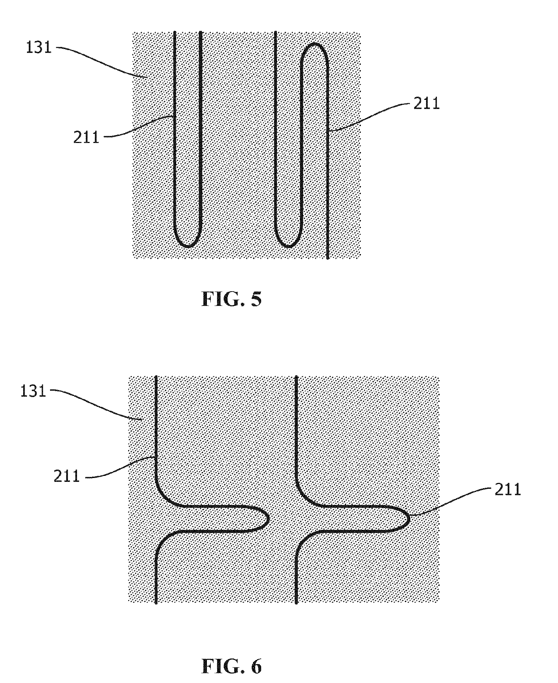

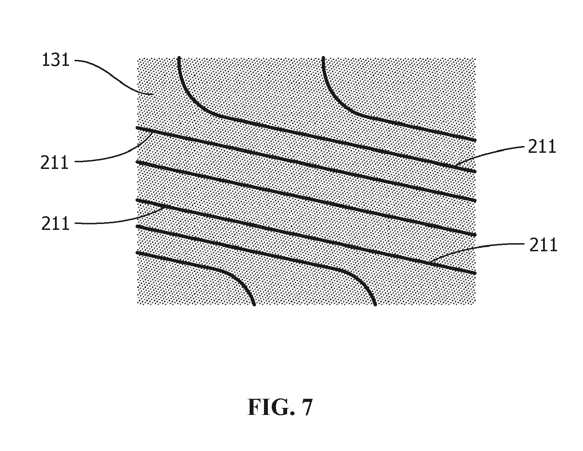

FIGs. 5, 6 and 7 show alternate embodiments of circumferential surface feature 131, including cooling passages 211. In the embodiment shown in FIG. 5, the cooling passage 211 forms a U-shaped and serpentine passage path. The patterns of FIG. 5 provide a reduced number of entrances and exits compared to linearly run cooling passages 211 and also allow more efficient use of cooling fluid directed through cooling passages 211. In the embodiment shown in FIG. 6, the cooling passages form a U-shape along an otherwise linear path. This arrangement permits concentrated cooling at a particular axial location along rotor 101. In the embodiment shown in FIG. 7, the cooling passages form a helical cooling pattern along a path traversing the surface of rotor 101. This arrangement permits cooling along a helical path on the surface of rotor 101.

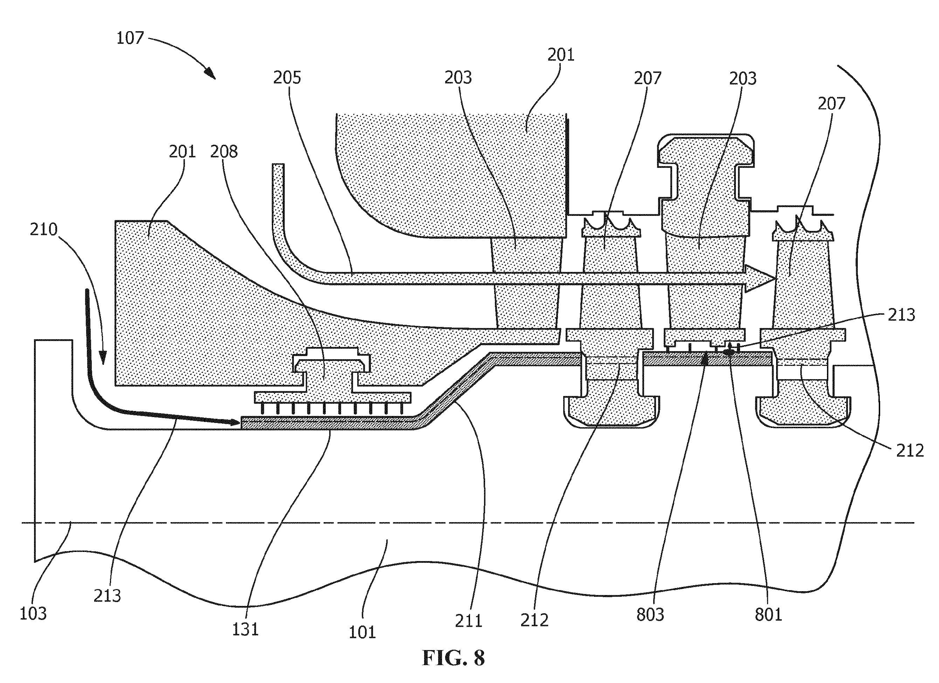

FIG. 8 shows an enlarged portion of IP section 107 having the arrangement shown and described with respect to FIG. 2. In this embodiment, an opening 801 is provided in circumferential surface feature 131 within a seal 803 of nozzle 203. Such an opening location permits exhausting of cooling fluid 213 into the seal 803, wherein the purge of cooling fluid into seal 803 minimizes, eliminates, or otherwise prevents leakage of steam through the seal. In one embodiment, the prevention of leakage would provide some performance efficiencies for turbine.

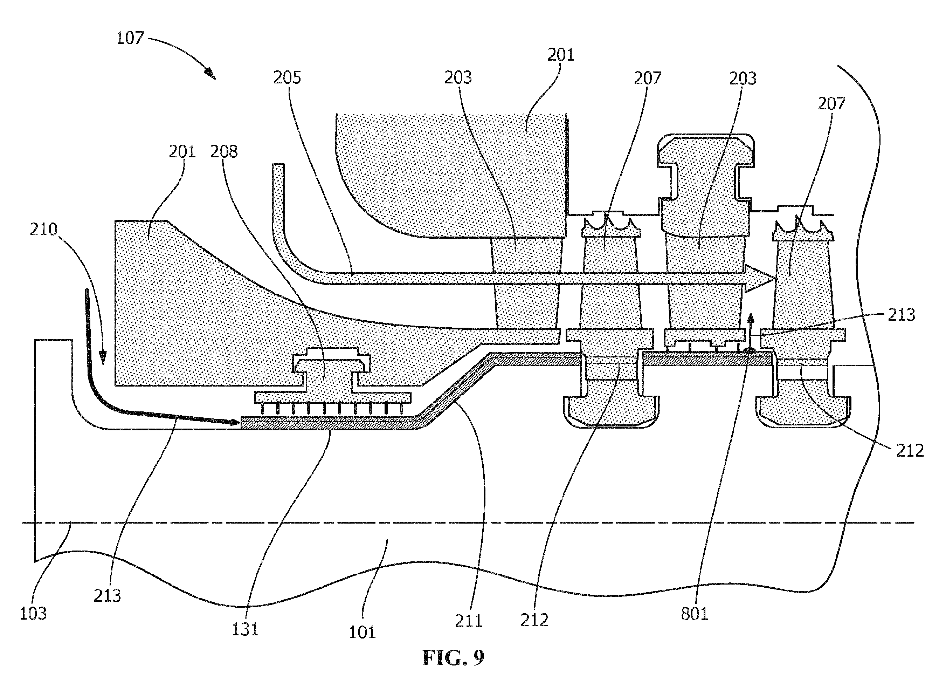

FIG. 9 shows an enlarged portion of IP section 107 having the arrangement shown and described with respect to FIG. 2. In this embodiment, an opening 801 is provided in circumferential surface feature 131 within a seal 803 of nozzle 203. Such an opening location permits exhausting of cooling fluid 213 circumferentially or at an alternate angle into the steam flow path 205. In one embodiment, the cooling fluid 213 is injected at an angle to the steam flow path to minimize mixing losses on re-entry. In another embodiment shown in FIG. 9, bucket passage 212 is formed by chamfering the edges or otherwise forming channels in the individual bucket dovetail surfaces, such as the end faces. In this embodiment, the cooling flow is routed along a path corresponding to the dovetail root of bucket 207 and permits additional cooling of rotor 101.

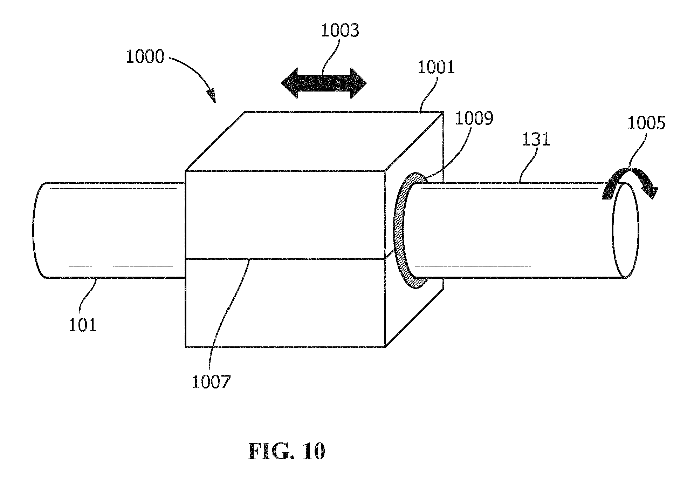

In one embodiment, as shown in FIG. 10, the circumferential surface features 131 are formed with an additive manufacturing system 1000. Additive manufacturing system 1000 includes an additive manufacturing cell 1001 arranged to receive a rotor 101. The additive manufacturing cell 1001 is movable in a lateral direction 1003 and the rotor 101 is rotatably mounted within additive manufacturing cell 1001, allowing a rotary motion 1005. The additive manufacturing cell 1001 includes equipment arranged to perform an additive manufacturing method on the surface of rotor 101. For example, the additive method may include forming circumferential surface features 131 with cooling passages 211 on the surface of rotor 101. Suitable additive manufacturing methods include, but are not limited to, the processes known to those of ordinary skill in the art as Direct Metal Laser Melting (DMLM), Direct Metal Laser Sintering (DMLS), Laser Engineered Net Shaping (LENS), Selective Laser Sintering (SLS), Selective Laser Melting (SLM), Electron Beam Melting (EBM), Fused Deposition Modeling (FDM), or a combination thereof. The additive manufacturing cell 1001 includes a cell split line 1007 that opens to permit positioning of rotor 101 and servicing of equipment within the additive manufacturing cell 1001. In addition, additive manufacturing cell 1001 include a seal 1009, such as a brush seal, to assist in maintaining the desired atmosphere within additive manufacturing cell 1001 for deposition of the material for circumferential surface feature 131.

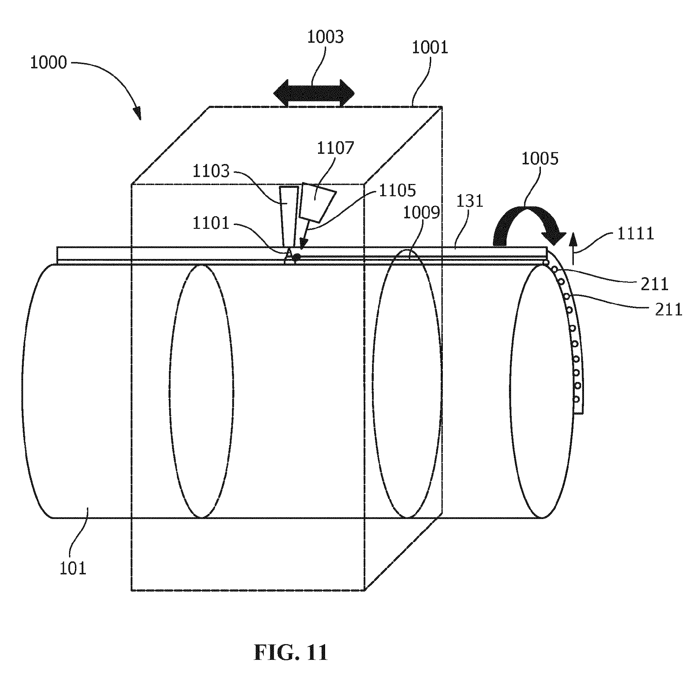

As illustrated in FIG. 11, in one embodiment, the method is an additive manufacturing process for forming the circumferential surface feature 131. It is noted that the present disclosure is not limited to the specific arrangement shown in FIG. 11 and other suitable arrangements may be utilized to forming the circumferential surface feature 131 via additive manufacturing. The process shown in FIG. 11 includes providing a metallic powder 1101 to the surface of rotor 101 from a metallic powder source 1103. The metallic powder 1101 is then heated with a focused energy beam 1105, such as a laser, from focused energy source 1107. The heating of the metallic powder 1101 is to a temperature sufficient to join at least a portion of the metallic powder 1101 to form an initial layer 1109, and the system 1000 sequentially forms additional layers that lay up in a build direction 1111 to form the circumferential surface feature 131 having a cooling passage 211 formed in the build direction 1111. The method includes repeating the steps of sequentially forming the additional layers 1109 in the build direction 1111 to form the circumferential surface feature 131 having a cooling passage 211. Once the layers 1109 are built up, the rotor 101 is rotated and process is repeated. While the process above has been described with a particular order of building up layers, other sequences may be utilized, such as, evenly building up layers 1109 across the surface of rotor 101 prior to applying subsequent layers.

In one embodiment, the heating of the metallic powder 1101 includes, but is not limited to, melting the metallic powder 1101, sintering at least a portion of the metallic powder 1101, welding at least a portion of the metallic powder 1101, or a combination thereof. For example, in another embodiment, the heating the metallic powder 1101 to a temperature sufficient to join the metallic powder includes controllably directing a focused energy source toward the metallic powder 1101. Suitable focused energy sources include, but are not limited to, a laser device, an electron beam device, or a combination thereof. The laser device includes any laser device operating in a power range and travel speed for melting and/or welding the metallic powder 1101, such as, but not limited to, a fiber laser, a CO₂ laser, or a ND-YAG laser.

Suitable power ranges for the focused energy source 1107 include, but are not limited to, between 125 and 500 watts, between 150 and 500 watts, between 150 and 400 watts, or any combination, sub-combination, range, or sub-range thereof. Additionally, the travel speed includes, but is not limited to, between 400 and 1200 mm/sec, between 500 and 1200 mm/sec, between 500 and 1000 mm/sec, or any combination, sub-combination, range, or sub-range thereof. For example, in one embodiment, the focused energy source 1107 operates in the power range of between 125 and 500 watts, at the travel speed of between 400 and 1200 mm/sec for one to three contour passes. In another embodiment, the focused energy source 1107 includes a hatch spacing of between about 0.08 mm and 0.2 mm.

The parameters of the focused energy source 1107 are dependent upon the material and/or orientation of the metallic powder 1101 used to form the circumferential surface feature 131. In one embodiment, the power and/or travel speed is adjusted based upon a melting temperature of the material in the metallic powder 1101. For example, the power and/or travel speed may be increased for materials having comparatively increased melting temperatures. Suitable materials for the metallic powder 1101 include any material capable of being joined through additive manufacturing, such as, but not limited to, a metal, a metallic alloy, a superalloy, steel, a stainless steel, a tool steel, nickel, cobalt, chrome, titanium, aluminum, or a combination thereof.

In another embodiment, the power and/or travel speed is adjusted based upon a number of metallic powder layers being joined and/or a thickness of each of the metallic powder layers. For example, the power and/or travel speed may be increased to join multiple layers of the metallic powder 1101 and/or layers of the metallic powder 1101 having increased thickness, as compared to the power and/or travel speed used to join a single layer of the metallic powder 1101 and/or layers of the metallic powder 1101 having a comparatively decreased thickness. The initial layer 1109 and each of the additional layers includes a thickness in the range of 20-100 µm (0.0008-0.004 inches), 20-80 µm (0.0008-0.0032 inches), 40-60 µm (0.0016-0.0024 inches), or any combination, sub-combination, range, or sub-range thereof. The thickness of the initial layer 1109 is equal to or dissimilar from the thickness of each of the additional layers, which is maintained or varied for each of the additional layers. Based upon the thicknesses of the initial layer 1109 and each of the additional layers, a thickness of the circumferential surface feature 131 includes any suitable thickness, such as thicknesses of about 2 mm to about 6.5 mm or from about 3 mm to about 5 mm or from about 3.5 mm to about 4.5 mm. In addition, the circumferential surface feature 131 may include any suitable diameter, including average diameters of from about 1 mm to about 4 mm or from about 2 mm to about 3 mm or from about 1.5 mm to about 2.5 mm.

In one embodiment, the method may further include processing the rotor 101 with the circumferential surface features 131. Suitable processing steps include, but are not limited to, hot isostatically pressing (HIP'ing) the rotor 101 and circumferential surface features 131, solution heat treating (solutionizing) the rotor 101 and circumferential surface features 131, or a combination thereof. The HIP'ing includes, after forming the rotor 101 and circumferential surface features 131, the rotor 101 and circumferential surface features 131 at an elevated temperature and elevated pressure sufficient to further consolidate the rotor 101 and circumferential surface features 131. For example, in another embodiment, the rotor 101 and circumferential surface features 131 is HIP'd for 3-5 hours at an elevated temperature of between 1149° C and 1260° C (2100° F and 2300° F), and an elevated pressure of between 68.95 MPa and 137.9 MPa (10,000 PSI and 20,000 PSI). The HIP'ing further consolidates the rotor 101 and circumferential surface features 131 to increase the density, for example, between about 98% and about 99% to between about 99.5% and about 99.8%. The solutionizing includes, after forming the rotor 101 and circumferential surface features 131 and/or HIP'ing the rotor 101 and circumferential surface features 131, treating the rotor 101 and circumferential surface features 131 for 1-2 hours in a vacuum at an elevated temperature of between 1093° C and 1205° C (2000° F and 2200° F). The elevated temperature includes any temperature sufficient for distributing segregated alloying elements within the article 200. It will be recognized by those skilled in the art that HIP'ing temperatures and heat treat temperatures will be highly dependent on the composition of the powders and the desired properties.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. In addition, all numerical values identified in the detailed description shall be interpreted as though the precise and approximate values are both expressly identified. For completeness, various aspects of the invention are set out in the following numbered clauses:
1. A method for forming a rotating component, said method comprising:
   providing a rotor having an outer surface;
   forming a circumferential surface feature on the outer surface of the rotor, the forming including applying metallic material to the outer surface of the rotor to build up the circumferential surface feature on outer surface of the rotor to define at least one cooling passageway.
2. The method of clause 1, wherein the forming includes building up the layer using an additive manufacturing process.
3. The method of clause 1, wherein the additive manufacturing process is selected from the group consisting of Direct Metal Laser Melting, Direct Metal Laser Sintering, Laser Engineered Net Shaping, Selective Laser Sintering, Selective Laser Melting, Electron Beam Melting, Fused Deposition Modeling, and combinations thereof.
4. The method of clause 1, wherein the cooling passageway defines cooling path for cooling fluid arranged and disposed to cool the rotor.
5. The method of clause 1, wherein the cooling passageway defines one or more of a U-shaped, S-shaped, helical path along the outer surface of the rotor.
6. The method of clause 1, wherein the cooling passageways include a cross-sectional geometry selected from the group consisting of circular, substantially circular, ovoid, elliptical, triangular, teardrop, square, rectangular, polygonal, and combinations thereof.
7. The method of clause 1, wherein the rotor having the circumferential surface feature is further processed by one or more of hot isostatically pressing and solution heat treating.
8. A rotating component comprising:
   a rotor having a circumferential surface feature defining at least one passageway, the circumferential surface feature including a feature formed on an
   outer surface of the rotor and built up from the outer surface to define the at least one cooling passageway.
9. The rotating component of clause 8, wherein the cooling passageway defines cooling path for cooling fluid arranged and disposed to cool the rotor.
10. The rotating component of clause 8, wherein the cooling passageway defines one or more of a U-shaped or S-shaped path along the outer surface of the rotor.
11. The rotating component of clause 8, wherein the cooling passageways include a cross-sectional geometry selected from the group consisting of circular, substantially circular, ovoid, elliptical, triangular, teardrop, square, rectangular, polygonal, and combinations thereof.
12. The rotating component of clause 8, wherein the at least one passageway is arranged and disposed to receive cooling fluid sufficient to cool the rotor.
13. A steam turbine system comprising:
   a rotating component of clause 8, the rotor being a steam turbine rotor rotatably mounted within a casing;
   a steam path defined by a space between the rotor and the casing and arranged and disposed to receive a flow of steam;
   wherein the cooling passage is arranged and disposed to cool the steam turbine rotor.
14. The steam turbine system of clause 13, wherein the steam turbine rotor is within an intermediate pressure section of the steam turbine system.
15. The steam turbine system of clause 13, wherein the steam turbine rotor is within a high pressure section of the steam turbine system.
16. The steam turbine system of clause 13, further comprising an exhaust passage positioned outside of the steam path and in fluid communication with the cooling passageway.
17. The steam turbine system of clause 13, wherein the steam turbine rotor includes a plurality of buckets mounted thereon, at least a portion of the plurality of buckets having a bucket passage to permit flow of cooling fluid therethrough from the cooling passage.
18. An apparatus for forming a rotating component comprising:
   an additive manufacturing cell comprising:
      a metallic powder source arranged and disposed to provide metallic powder to the surface of a rotor; and
      a focused energy source arranged and disposed to heat the metallic powder on the surface of the rotor to form a metallic layer on the surface of a rotor;
   wherein the additive manufacturing cell is movable along an axis of the rotor and is arranged and disposed to sequentially deposit the metallic layers and form a circumferential surface feature having a cooling passage on the rotor.
19. The apparatus of clause 18, wherein the additive manufacturing cell is configured to receive the rotor, wherein the rotor is a steam turbine rotor.
20. The apparatus of clause 18, wherein the metallic powder source and focused energy source is arranged and disposed to perform a process selected from the group consisting of Direct Metal Laser Melting, Direct Metal Laser Sintering, Laser Engineered Net Shaping, Selective Laser Sintering, Selective Laser Melting, Electron Beam Melting, Fused Deposition Modeling, and combinations thereof.

## Claims

1. A method for forming a rotating component, said method comprising:
providing a rotor (101) having an outer surface;
forming a circumferential surface feature (131) on the outer surface of the rotor (101), the forming including applying metallic material to the outer surface of the rotor (101) to build up the circumferential surface feature (131) on outer surface of the rotor (101) to define at least one cooling passageway (211).

2. The method of claim 1, wherein the forming includes building up the layer using an additive manufacturing process.

3. The method of claim 1, wherein the additive manufacturing process is selected from the group consisting of Direct Metal Laser Melting, Direct Metal Laser Sintering, Laser Engineered Net Shaping, Selective Laser Sintering, Selective Laser Melting, Electron Beam Melting, Fused Deposition Modeling, and combinations thereof.

4. The method of claim 1, wherein the cooling passageway (211) defines cooling path for cooling fluid (213) arranged and disposed to cool the rotor (101).

5. The method of claim 1, wherein the cooling passageway 211 defines one or more of a U-shaped, S-shaped, helical path along the outer surface of the rotor (101).

6. The method of claim 1, wherein the cooling passageways (211) include a cross-sectional geometry selected from the group consisting of circular, substantially circular, ovoid, elliptical, triangular, teardrop, square, rectangular, polygonal, and combinations thereof.

7. The method of claim 1, wherein the rotor (101) having the circumferential surface feature (131) is further processed by one or more of hot isostatically pressing and solution heat treating.

8. A rotating component comprising:
a rotor (101) having a circumferential surface feature (131) defining at least one passageway, the circumferential surface feature (131) including a feature formed on an outer surface of the rotor (101) and built up from the outer surface to define the at least one cooling passageway (211).

9. The rotating component of claim 8, wherein the cooling passageway (211) defines cooling path for cooling fluid (213) arranged and disposed to cool the rotor (101).

10. The rotating component of claim 8, wherein the cooling passageway (211) defines one or more of a U-shaped or S-shaped path along the outer surface of the rotor (101).

11. The rotating component of claim 8, wherein the cooling passageways (211) include a cross-sectional geometry selected from the group consisting of circular, substantially circular, ovoid, elliptical, triangular, teardrop, square, rectangular, polygonal, and combinations thereof.

12. The rotating component of claim 8, wherein the at least one passageway is arranged and disposed to receive cooling fluid (213) sufficient to cool the rotor (101).

13. A steam turbine system (100) comprising:
a rotating component of claim 8, the rotor (101) being a steam turbine rotor (101) rotatably mounted within a casing (201);
a steam path defined by a space between the rotor (101) and the casing (201) and arranged and disposed to receive a flow of steam;
wherein the cooling passage is arranged and disposed to cool the steam turbine rotor (101).

14. The steam turbine system (100) of claim 13, wherein the steam turbine rotor (101) is within an intermediate pressure section of the steam turbine system (100).

15. The steam turbine system (100) of claim 13, wherein the steam turbine rotor (101) is within a high pressure section of the steam turbine system (100).
